# EUROPÄISCHE PATENTANMELDUNG

(11) **EP 4 516 541 A2**
(43) Veröffentlichungstag der Anmeldung: **05.03.2025**
(21) Anmeldenummer: 24190185.9
(22) Anmeldetag: 23.07.2024
(51) Int. Cl.: B60H 1/00, B60H 3/06

(54) **KABINE SOWIE LANDWIRTSCHAFTLICHE ARBEITSMASCHINE MIT EINER KABINE**

(30) Priorität: 04.09.2023 DE 102023123687
(71) Anmelder: CLAAS Tractor S.A.S., 78141 Vélizy-Villacoublay Cedex (FR)
(72) Erfinder: Brisard, Christophe, 92360 Meudon la Forêt (FR); Auffret, Pierre, 75014 Paris (FR); Matar, Michel, 78910 Trappes (FR); Batista, Jonathan, 78000 Versailles (FR)
(74) Vertreter: CLAAS 365FarmNet GmbH

(57) **Zusammenfassung**

Die vorliegende Erfindung betrifft eine Kabine (3), umfassend:
- vordere und hintere Kabinensäulen (14, 15), auf denen ein Kabinendach (4) angeordnet ist,
- ein in der Kabine (3) angeordnetes Heizungs-, Lüftungs- und Klimatisierungssystem (HVAC-System) (19) mit einem Gebläse, wobei dem HVAC-System (19) zumindest durch die hinteren Kabinensäulen (15) ein Luftstrom (17) mit Umgebungsluft zuführbar ist, sowie
- eine Filtereinrichtung, die zur Filtration der dem HVAC-System (19) zugeführten Umgebungsluft eingerichtet ist, wobei im Kabinendach (4) eine Aufnahme für zumindest ein Filterelement (18) der Filtereinrichtung vorgesehen ist, wobei das zumindest eine Filterelement (18) in Abhängigkeit von aus der Umgebungsluft herauszufilternden Stoffen austauschbar und/oder durch ein weiteres Filterelement (18) ergänzbar ist, und dass im Inneren der Kabine (3) zur Zuführung der gefilterten Umgebungsluft ein austauschbarer Ansaugabschnitt (21) eines Lufteinlasselements (20) des HVAC-Systems (19) angeordnet ist, wobei der austauschbare Ansaugabschnitt (21) in Abhängigkeit von dem zumindest einen gewählten Filterelement (18) unterschiedlich ausgebildet ist.

## Beschreibung

Die vorliegende Erfindung betrifft eine Kabine gemäß dem Oberbegriff des Anspruches 1. Weiterhin ist eine landwirtschaftliche Arbeitsmaschine, insbesondere Traktor, mit einer Kabine Gegenstand der vorliegenden Erfindung.

Aus der EP 2 644 420 B1 sind eine Kabine sowie eine landwirtschaftliche Arbeitsmaschine der eingangs genannten Art bekannt.

In Abhängigkeit vom Einsatzgebiet der landwirtschaftlichen Arbeitsmaschine bzw. der von dieser durchzuführenden Aufgabe werden an eine Filtereinrichtung, die zur Filtration von einem Heizungs-, Lüftungs- und Klimatisierungssystem (HVAC-System) zugeführter Umgebungsluft eingerichtet ist, unterschiedliche Anforderungen gestellt. Dazu werden Kabinen gemäß DIN EN 15695 in vier Kategorien unterteilt, welche auf die unterschiedlichen Schutzgrade der Kabine abstellen. In Kategorie 1 sind Kabinen eingruppiert, die über kein Filterelement verfügen, so dass Staub und dergleichen in die Kabine gelangen können. Kategorie 2 sieht ein Filterelement vor, welches feste Partikel wie Staub und dergleichen aus der Umgebungsluft filtert. In Kategorie 3 ist zumindest ein Filterelement vorgesehen, welches zudem Aerosole aus der Umgebungsluft filtert. Die Kategorie 4 erfordert zumindest ein Filterelement welches darüber hinaus auch gasförmige Stoffe, wie sie beispielsweise bei der Ausbringung von Pflanzenschutzmitteln oder dergleichen auftreten, aus der Umgebungsluft filtert, um den in der Kabine befindlichen Bediener der landwirtschaftlichen Arbeitsmaschine vor gesundheitsbeeinträchtigenden Einflüssen zu schützen. Zudem erhöhen sich bei Filtereinrichtungen der Kategorien 3 und 4 die Anforderungen an das Gebläse des HVAC-Systems, um in ausreichender Menge Umgebungsluft anzusaugen, um einen kontinuierlichen Luftaustausch in der Kabine zu gewährleisten.

Ausgehend vom vorstehend genannten Stand der Technik liegt der Erfindung die Aufgabe zugrunde, eine Kabine sowie eine landwirtschaftliche Arbeitsmaschine mit einer Kabine weiterzubilden, welche eine einfachere Anpassung an unterschiedliche Einsatzgebiete bzw. Aufgaben der Arbeitsmaschine ermöglicht, um die Anforderungen der DIN EN 15695 zu erfüllen.

Diese Aufgabe wird erfindungsgemäß durch eine Kabine mit den Merkmalen des Anspruches 1 sowie eine landwirtschaftliche Arbeitsmaschine mit den Merkmalen des Anspruches 15 gelöst. Vorteilhafte Weiterbildungen sind Gegenstand der abhängigen Ansprüche.

Gemäß dem Anspruch 1 wird eine Kabine vorgeschlagen, wobei die Kabine vordere und hintere Kabinensäulen, auf denen ein Kabinendach angeordnet ist, ein in der Kabine angeordnetes Heizungs-, Lüftungs- und Klimatisierungssystem (HVAC-System) mit einem Gebläse, wobei dem HVAC-System zumindest durch die hinteren Kabinensäulen ein Luftstrom mit Umgebungsluft zuführbar ist, sowie eine Filtereinrichtung, die zur Filtration der dem HVAC-System zugeführten Umgebungsluft eingerichtet ist, umfasst, wobei im Kabinendach eine Aufnahme für zumindest ein Filterelement der Filtereinrichtung vorgesehen ist. Erfindungsgemäß ist vorgesehen, dass das zumindest eine Filterelement in Abhängigkeit von aus der Umgebungsluft herauszufilternden Stoffen austauschbar und/oder durch ein weiteres Filterelement ergänzbar ist, und dass im Inneren der Kabine zur Zuführung der gefilterten Umgebungsluft ein austauschbarer Ansaugabschnitt eines Lufteinlasselements des HVAC-Systems angeordnet ist, wobei der austauschbare Ansaugabschnitt in Abhängigkeit von dem zumindest einen gewählten Filterelement unterschiedlich ausgebildet ist.

Wesentlich ist dabei die Überlegung, dass Filtereinrichtungen mit Filterelementen der Kategorien 3 oder 4 oftmals in bestehende Kabinen landwirtschaftlicher Arbeitsmaschinen, insbesondere Traktoren, nachgerüstet werden, die in unterschiedlichen Einsatzgebieten zum Einsatz kommen. Die erfindungsgemäße Ausgestaltung der Kabine ermöglicht das Nachrüsten des Lufteinlasselements durch das Austauschen des Ansaugabschnitts des Lufteinlasselements für Umgebungsluft und des zumindest einen Filterelementes unabhängig von der Kategorie des bereits verbauten Filterelementes, ohne hierbei zusätzliche bauraumbeanspruchende Aufbauten und/oder Lüftungswege im oder auf dem Dach vorsehen zu müssen.

Insbesondere kann der austauschbare Ansaugabschnitt des Lufteinlasselements, welcher mit einem Filterelement, welches zur Filtration von staubförmigen Partikeln aus der Umgebungsluft eingerichtet und ausgeführt ist, zusammenwirkt, als Kanalabschnitt ausgeführt sein, der mit den hinteren Kabinensäulen strömungstechnisch verbunden ist.

Bevorzugt kann der austauschbare Ansaugabschnitt des Lufteinlasselements, welcher mit zumindest einem Filterelement, welches zur Filtration von staubförmigen Partikeln und Aerosolen und/oder gasförmigen Stoffen aus der Umgebungsluft eingerichtet und ausgeführt ist, zusammenwirkt, als mit den hinteren Kabinensäulen strömungstechnisch verbundener Kanalabschnitt ausgeführt sein, in den ein Zusatzgebläse integriert ist. Im Unterschied zu einem Filterelement der Kategorie 2 erfordert ein Filterelement der Kategorie 3 oder 4 ein zusätzliches Gebläse. Durch die Integration in den kategoriespezifisch ausgeführten Ansaugabschnitt ist neben dem Filterelement lediglich der in der Kabine befindliche Ansaugabschnitt des HVAC-Systems durch einen Austausch anzupassen, wodurch die Anpassung an unterschiedliche Einsatzgebiete bzw. Aufgaben der Arbeitsmaschine vereinfacht wird.

Gemäß einer bevorzugten Weiterbildung kann das Kabinendach zweischalig ausgeführt sein, wobei zwischen einem unteren Dachelement und einem oberen Dachelement ein Luftansaugkanal ausgebildet ist, der, ausgehend von einer der vorderen Kabinensäulen, sich abschnittsweise in Längsrichtung der Kabine erstreckt und sich im Bereich der hinteren Kabinensäulen zwischen diesen in Querrichtung erstreckt, wobei der Luftansaugkanal durch Verkleben des unteren Dachelementes mit dem oberen Dachelement ausgebildet ist. Der Luftansaugkanal ist durch Verkleben des unteren Dachelementes mit dem oberen Dachelement geschlossen ausgebildet. Dabei kann das untere Dachelement und/oder das obere Dachelement auf seiner dem anderen Dachelement zugewandten Innenseite mit einer Profilierung versehen sein, die den Luftansaugkanal ausgebildet. Hierdurch kann auf zusätzliche Zwischenelemente verzichtet werden, um den Luftansaugkanal auszubilden.

Weiterhin kann der Luftansaugkanal einen außerhalb der Kabine mündenden Ansaugbereich im Kabinendach aufweisen, in den das zumindest eine Filterelement in eine im Luftansaugkanal ausgebildete Aufnahme einsetzbar ist. Insbesondere ist der Ansaugbereich im Kabinendach randseitig, d.h. sich peripher zwischen einer der vorderen und der hinteren Kabinensäulen erstreckend angeordnet.

Des Weiteren kann der Luftansaugkanal mit den hinteren Kabinensäulen strömungstechnisch verbunden sein, wobei im Übergang zwischen dem unteren Dachelement und den hinteren Kabinensäulen jeweils Dichtungen angeordnet sind. Als Übergang werden die Grenzflächen zwischen den hinteren Kabinensäulen und dem unteren Dachelement bezeichnet, in denen diese aufeinanderstoßen. Die Dichtungen dienen dazu, den Eintritt von Verunreinigungen in und das Austreten von Luft aus dem Luftansaugkanal in diesem Bereich zu verhindern. Die Dichtungen können bevorzugt als ringförmige Silikondichtungen ausgeführt sein.

Bevorzugt kann das zumindest eine Filterelement mit einem durch ein Datenempfangsgerät auslesbaren Speicherelement ausgeführt ist, welches eine Information über die Filterkategorie enthält. Bevorzugt kann das Speicherelement als RFID-Tag, iBeacon oder dergleichen ausgeführt sein, welches eine entfernte Auslesung von Daten ohne unmittelbare Sicht auf das Speicherelement ermöglicht.

Insbesondere kann hierzu das Datenempfangsgerät in der Kabine angeordnet und mit einer Steuereinheit des HVAC-Systems signaltechnisch verbunden sein, wobei die Steuereinheit dazu eingerichtet ist, das HVAC-System in Abhängigkeit von der aus dem Speicherelement ausgelesenen Information zum zumindest einen Filterelement anzusteuern. Die Komponenten des HVAC-Systems arbeiten abhängig von der Kategorie respektive des Schutzgrades der Kabine unterschiedlich und können so entsprechend des oder der die höchste Kategorie aufweisenden, im Kabinendach angeordneten Filterelemente automatisiert angesteuert werden.

Bevorzugt kann in der Kabine eine Kühlbox angeordnet sein, welche durch einen Bypass unmittelbar mit einer der Kühlung dienenden Komponente des HVAC-Systems verbunden ist. Der Bypass ist bevorzugt als Leitung oder Kanal ausgeführt. Die der Kühlung dienende Komponente, mit welcher die Kühlbox durch den Bypass unmittelbar verbunden ist, ist einer dem Heizen dienenden Komponente des HVAC-Systems vorgeschaltet. Durch den unmittelbaren Anschluss an die der Kühlung dienenden Komponente kann eine in der Kabine vorhandene Kühlbox gekühlt werden. Insbesondere kann eine Kühlung der Kühlbox in allen Betriebssituationen des HVAC-Systems gewährleistet werden.

Gemäß einer Weiterbildung kann einer dem Heizen dienenden Komponente des HVAC-Systems ein Schnittstellenelement nachgeschaltet sein, welches zur Zuführung und Aufteilung eines von dem HVAC-System konditionierten Luftstroms durch unterschiedliche Kanäle zu verschiedenen Abschnitten im Front- und Seitenbereich der Kabine eingerichtet ist. Das Schnittstellelement dient der Aufteilung des vom HVAC-System bereitgestellten Luftstroms. Dabei kann der vom HVAC-System bereitgestellte Luftstrom insbesondere der Lenksäule, dem Fußraum sowie den Seitenbereich der Kabine durch die unterschiedlichen Kanäle zugeführt werden, die sich an das Schnittstellenelement anschließen. Hierzu kann das Schnittstellelement zumindest einen Kanal aufweisen, der in die Lenksäule mündet sowie zwei weitere Kanäle, die zum Seitenbereich der Kabine führen. Bevorzugt sind zwei Kanäle vorgesehen, die in die Lenksäule münden. Für den Austritt eines konditionierten Luftstroms im Fußraum kann das Schnittstellenelement eine durch ein Gitter, Sieb oder dergleichen abgedeckte Austrittsöffnung aufweisen.

Um Druckverluste und durch die Luftströmung verursachte Geräusche zu reduzieren, können das Schnittstellelement, die Kanäle und/oder weitere luftführende Komponenten des HVAC-Systems mit Luftführungselementen ausgeführt sein.

Weiterhin können zwischen den und/oder um die im Kabinenboden verlaufenden Kanäle des HVAC-Systems Isolationselemente angeordnet sein. Durch die Isolationselemente können Wärmetransfer sowie Geräuschtransfer reduziert werden.

Bevorzug kann das HVAC-System ein weiteres Schnittstellelement umfassen, welches zur Zuführung und Abführung von Fluiden in die und aus der Kabine eingerichtet. Beispielsweise kann durch das weitere Schnittstellelement Kondensat abgeführt werden.

Insbesondere kann das weitere Schnittstellenelement gegenüber der Kabine fluiddicht mit dem HVAC-System verbunden sein. Hierdurch kann verhindert werden, dass Verunreinigungen und/oder Feuchtigkeit in die Kabine eintreten können.

Ein weiterer Aspekt ist, dass der austauschbare Ansaugabschnitt des Lufteinlasselements an die vorhandene Luftführungsstruktur angepasst ist.

Weiterhin kann das Lufteinlasselement einen Ansaugbereich aufweisen, welcher der Ansaugung von Luft aus dem Inneren der Kabine dient. Hierzu kann das Lufteinlasselement einen Umluftfilter aufnehmen.

Die eingangs gestellte Aufgabe wird weiterhin durch eine landwirtschaftliche Arbeitsmaschine mit den Merkmalen des nebengeordneten Anspruches 15 gelöst.

Gemäß dem nebengeordneten Anspruch 15 wird eine landwirtschaftliche Arbeitsmaschine, insbesondere ein Traktor, mit einer Kabine vorgeschlagen, wobei die Kabine nach einem der Ansprüche 1 bis 14 ausgeführt ist. Auf die Vorteile der erfindungsgemäßen Kabine darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Arbeitsmaschine in Seitenansicht;
- Fig. 2: schematisch und exemplarisch eine perspektivische Ansicht auf ein unteres Dachelement des Kabinendachs gemäß Fig. 1;
- Fig. 3: schematisch und exemplarisch eine stark vereinfachte Ansicht von Komponenten eines Heizungs-, Lüftungs- und Klimatisierungssystem (HVAC-System) und der Luftführung zur Zuführung von Umgebungsluft;
- Fig. 4: schematisch und exemplarisch eine vereinfachte Ansicht des Heizungs-, Lüftungs- und Klimatisierungssystems (HVAC-System); und
- Fig. 5: schematisch und exemplarisch eine Teilschnittansicht im Heckbereich des Kabinendachs gemäß Fig. 2.

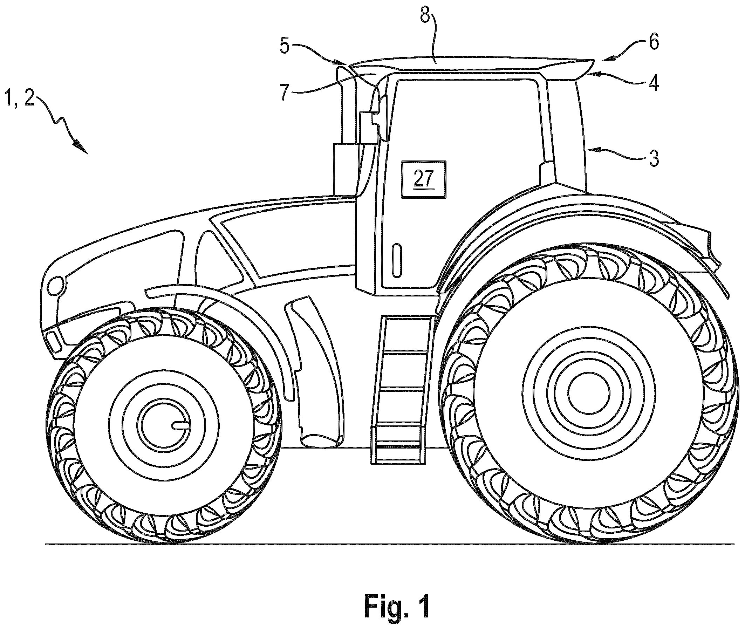

In Fig. 1 ist schematisch und exemplarisch eine landwirtschaftliche Arbeitsmaschine 1 in Seitenansicht dargestellt. Die landwirtschaftliche Arbeitsmaschine 1 ist insbesondere als ein Traktor 2 ausgeführt. Die landwirtschaftliche Arbeitsmaschine 1 umfasst eine Kabine 3. Die Kabine 3 ist nach oben hin durch ein Kabinendach 4 abgeschlossen. Das Kabinendach 4 erstreckt sich vom Frontbereich 5 bis zum Heckbereich 6 der Kabine 3. Das Kabinendach 4 umfasst ein unteres Dachelement 7 und ein oberes Dachelement 8. In dem Kabinendach 4 sind zwischen dem unteren Dachelement 7 und dem oberen Dachelement 8 Komponenten einer Filtervorrichtung und/oder einer Klimatisierungsvorrichtung angeordnet. Bevorzugt sind das untere Dachelement 7 und das obere Dachelement 8 schalenförmig ausgeführt.

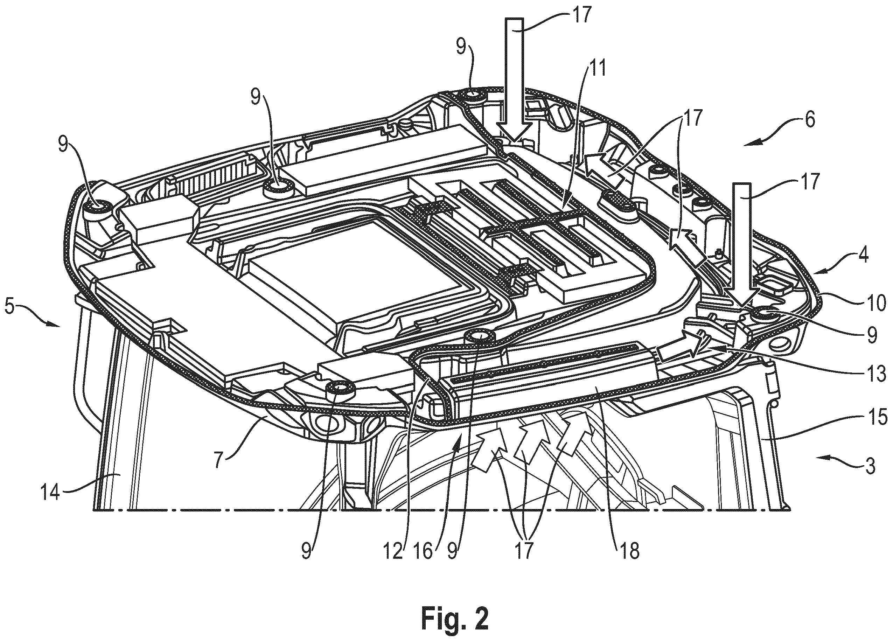

In Fig. 2 ist schematisch und exemplarisch eine perspektivische Ansicht auf das untere Dachelement 7 des Kabinendachs 4 gemäß Fig. 1 dargestellt. Das untere Dachelement 7 und das obere Dachelement 8 sind miteinander verbunden. Hierzu sind mehrere Befestigungspunkte 9 vorgesehen, die der Aufnahme von Befestigungsmitteln dienen.

Zudem können das untere Dachelement 7 und das obere Dachelement 8 durch einen umlaufenden Klebeabschnitt 10 am äußeren Rand der Dachelemente 7, 8 miteinander stoffschlüssig verbunden sein. Der am äußeren Rand der Dachelemente 7, 8 umlaufende Klebeabschnitt 10 kann zugleich der Abdichtung des Inneren des Kabinendachs 4 dienen, um das Eindringen von Staub und dergleichen zu verhindern.

Das Kabinendach 4 ist auf vorderen Kabinensäulen 14 und hinteren Kabinensäulen 15 angeordnet. Sowohl im Frontbereich 5 als auch im Heckbereich 6 sind zwei Kabinensäulen 14 bzw. 15 angeordnet.

Zwischen dem unteren Dachelement 7 und dem oberen Dachelement 8 ist eine Stützstruktur 11 angeordnet. Insbesondere ist die Stützstruktur 11 im Heckbereich 6 des Kabinendachs 4 angeordnet. Die Stützstruktur 11 kann sowohl am unteren Dachelement 7 als auch am oberen Dachelement 8 angeordnet bzw. ausgebildet sein. Im dargestellten Ausführungsbeispiel ist die Stützstruktur 11 am bzw. auf dem unteren Dachelement 7 angeordnet bzw. ausgebildet.

Ein weiterer innenliegender Klebeabschnitt 12 verbindet unter anderem die Stützstruktur 11 mit dem oberen Dachelement 8. Der abschnittsweise parallel zum randseitig umlaufenden Klebeabschnitt 10 verlaufende innenliegende Klebeabschnitt 12 dichtet zudem einen Luftansaugkanal 13 ab.

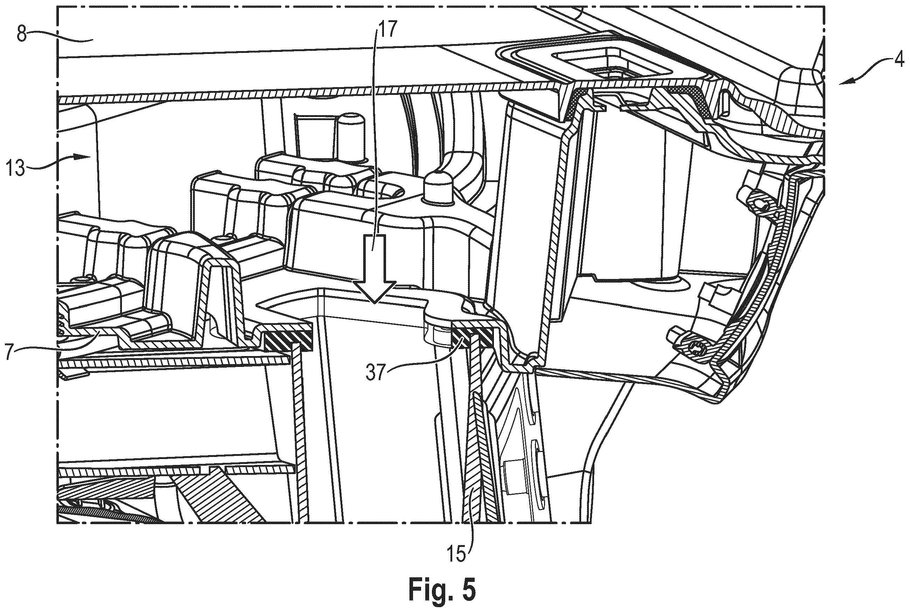

Der Luftansaugkanal 13 ist zwischen dem unteren Dachelement 7 und dem oberen Dachelement 8 ausgebildet. Der Luftansaugkanal 13 erstreckt sich ausgehend von einer der vorderen Kabinensäulen 14 abschnittsweise in Längsrichtung der Kabine 4 und im Heckbereich 6 zwischen den hinteren Kabinensäulen 15 in Querrichtung. Der Luftansaugkanal 13 ist durch das Verkleben des unteren Dachelementes 7 mit dem oberen Dachelement 8 geschlossen ausgebildet. Das untere Dachelement 7 und/oder das obere Dachelement 8 ist auf seiner dem anderen Dachelement 7, 8 zugewandten Innenseite mit einer Profilierung 38 versehen, wie in Fig. 5 dargestellt. Die Profilierung 38 bildet den Luftansaugkanal 13 aus und begrenzt diesen. Mittels des umlaufenden Klebeabschnitts 10 und des oder der innenliegenden Klebeabschnitte 12 wird der Luftansaugkanal 13 sowohl gegenüber der Umgebung als auch gegenüber dem übrigen inneren Bereich zwischen unteren Dachelement 7 mit dem oberen Dachelement 8 des Kabinendachs 4 abgedichtet.

Der Luftansaugkanal 13 weist einen außerhalb der Kabine 4 mündenden Ansaugbereich 16 im Kabinendach 4 auf, in den zumindest ein Filterelement 18 einsetzbar ist. Mittels Pfeilen wird der Strömungsverlauf eines aus der Umgebung angesaugten Luftstroms 17 veranschaulicht. Der Luftstroms 17 wird im Ansaugbereich 16 angesaugt und folgt dem Verlauf des Luftansaugkanals 13. Im Heckbereich 6 gelangt der Luftstrom 17 in die beiden hohlzylindrisch ausgeführten hinteren Kabinensäulen 15, was durch die senkrecht dargestellten Pfeile für den Luftstrom 17 veranschaulicht ist. Der von den hinteren Kabinensäulen 15 kommende Luftstrom 17 kann weiter stromabwärts zusammengeführt werden, bevor dieser einem Heizungs-, Lüftungs- und Klimatisierungssystem 19, nachfolgend als HVAC-System 19 bezeichnet, der Kabine 3 zugeführt wird. Das HVAC-System 19 ist in die Kabine 3 integriert.

Im Ansaugbereich 16 ist eine Aufnahme angeordnet bzw. ausgebildet, welche der auswechselbaren Anordnung des zumindest einen Filterelementes 18 dient. Dazu werden Kabinen gemäß DIN EN 15695 in vier Kategorien unterteilt, welche auf den Schutzgrad der Kabine vor eindringenden Stoffen abstellen. Ab Kategorie 2 ist ein Filterelement 18 vorgesehen, welches feste Partikel wie Staub und dergleichen aus der Umgebungsluft filtert. In Kategorie 3 ist zumindest ein Filterelement 18 vorgesehen, welches zudem Aerosole aus der Umgebungsluft filtert. Die Kategorie 4 erfordert zumindest ein Filterelement 18, welches darüber hinaus auch gasförmige Stoffe, insbesondere Dämpfe, aus der Umgebungsluft filtert, um den in der Kabine 3 befindlichen Bediener der landwirtschaftlichen Arbeitsmaschine 1 vor gesundheitsbeeinträchtigenden Einflüssen zu schützen.

Das zumindest eine Filterelement 18 kann mit einem durch ein Datenempfangsgerät auslesbaren Speicherelement 26 ausgeführt sein, welches eine Information über die Filterkategorie des Filterelementes 18 enthält. Bevorzugt kann das Speicherelement 26 als RFID-Tag, iBeacon oder dergleichen ausgeführt sein, welches eine entfernte Auslesung von Daten ohne unmittelbaren Sicht auf das Speicherelement 26 ermöglicht.

Insbesondere kann hierzu das Datenempfangsgerät in der Kabine 3 angeordnet und mit einer Steuereinheit 27 des HVAC-Systems 19 signaltechnisch verbunden sein. Das Datenempfangsgerät kann in die Steuereinheit 27 integriert oder als mobiles Datenempfangsgerätausgeführt sein. Die Steuereinheit 27 kann dazu eingerichtet sein, das HVAC-System 19 in Abhängigkeit von der aus dem Speicherelement 26 ausgelesenen Information zum zumindest einen Filterelement 18 anzusteuern. Die Komponenten des HVAC-Systems 19 arbeiten abhängig von der Kategorie respektive dem Schutzgrad der Kabine 3 unterschiedlich und können so entsprechend des oder der im Kabinendach 4 angeordneten Filterelemente 18 mit der höchsten Kategorie automatisiert angesteuert werden.

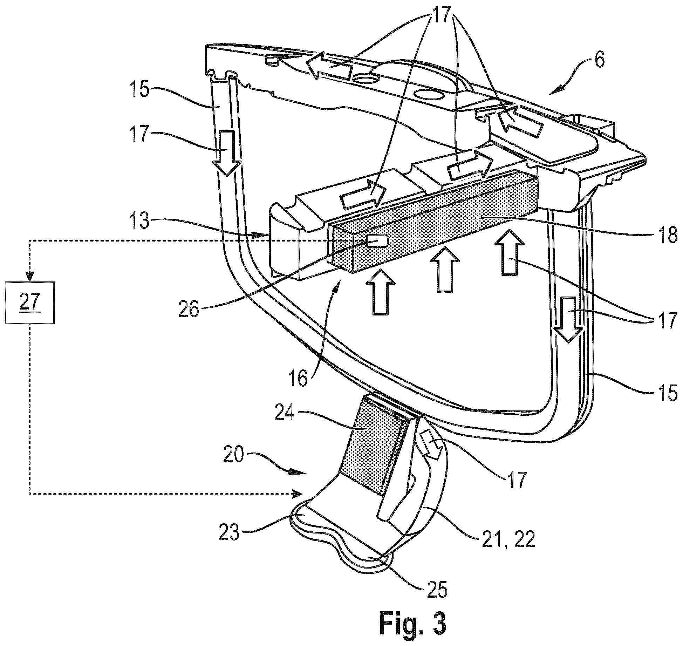

In Fig. 3 ist schematisch und exemplarisch eine stark vereinfachte Ansicht von Komponenten des Heizungs-, Lüftungs- und Klimatisierungssystem 19 und der Luftführung zur Zuführung von Umgebungsluft dargestellt. Zur Zuführung der durch das zumindest eine Filterelement 18 gefilterten Umgebungsluft ist im Inneren der Kabine 3 ein austauschbarer Ansaugabschnitt 21 eines Lufteinlasselements 20 des HVAC-Systems 19 angeordnet. Im in Fig. 3 dargestellten Ausführungsbeispiel ist der austauschbare Ansaugabschnitt 21 als ein Kanalabschnitt 22 ausgeführt ist, der mit einer oder beiden der hinteren Kabinensäulen 15 strömungstechnisch verbunden ist. Das zumindest eine Filterelement 18 ist zur Filtration von staubförmigen Partikeln aus der Umgebungsluft eingerichtet und ausgeführt, d.h. die Kabine 3 weist einen Schutzgrad der Kategorie 2 auf. Das Lufteinlasselement 20 umfasst weiterhin einen Innenraumansaugbereich 23 für Rezirkulationsluft aus dem Kabineninnenraum sowie einen daran angeordneten Rezirkulationsluftfilter 24, durch welchen die Rezirkulationsluft aus dem Inneren der Kabine 3 angesaugt wird, um diese anschließend wieder in die Kabine 3 zurückzuführen, sowie einen Ansaugbereich 25, an den der austauschbare Ansaugabschnitt 21 zur Zuführung der angesaugten Umgebungsluft angeschlossen ist.

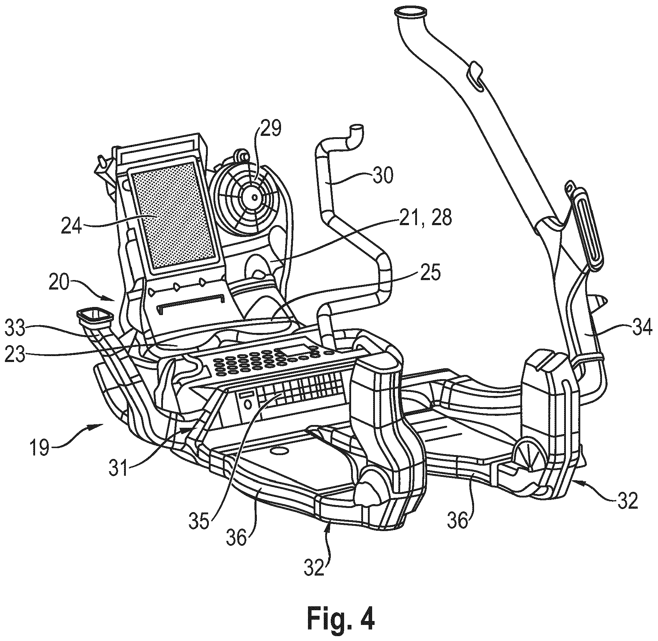

Die Darstellung in Fig. 4 zeigt schematisch und exemplarisch eine vereinfachte Ansicht des HVAC-Systems 19. Gemäß der dargestellten Ausführung des HVAC-Systems 19 ist der austauschbare Ansaugabschnitt 21 des Lufteinlasselements 20 als mit den hinteren Kabinensäulen 15 strömungstechnisch verbundener Kanalabschnitt 28 ausgeführt, in den ein Zusatzgebläse 29 integriert ist. Das zumindest eine Filterelement 18 ist zur Filtration von staubförmigen Partikeln und Aerosolen und/oder gasförmigen Stoffen aus der Umgebungsluft eingerichtet und ausgeführt, was der Kategorie 3 oder der Kategorie 4 entspricht. Das Zusatzgebläse 29 ist erforderlich, um aufgrund der spezifischen Ausgestaltung des zumindest einen Filters 18, der zur Filtration von staubförmigen Partikeln und Aerosolen und/oder gasförmigen Stoffen aus der Umgebungsluft eingerichtet und ausgeführt ist, durch diesen Umgebungsluft ansaugen und dem HVAC-System 19 zuführen zu können.

Ein wesentlicher Aspekt ist dabei, dass das Nachrüsten bzw. Umrüsten des Lufteinlasselements 20 durch das Austauschen des Ansaugabschnitts 21 für Umgebungsluft und des zumindest einen Filterelementes 18 unabhängig von der Kategorie des bereits verbauten Filterelementes 18 ermöglicht wird, ohne hierbei zusätzliche bauraumbeanspruchende Aufbauten und/oder Lüftungswege im oder auf dem Kabinendach 4 vorsehen zu müssen.

In der Kabine 3 kann eine - nicht dargestellte - Kühlbox angeordnet sein, welche durch einen Bypass 30 unmittelbar mit einer der Kühlung dienenden Komponente des HVAC-Systems 19 verbunden ist. Der Bypass 30 ist als Leitung oder Kanal ausgeführt. Die der Kühlung dienende Komponente ist vor einer dem Heizen dienenden Komponente des HVAC-Systems 19 vorgeschaltet, so dass durch den unmittelbaren Anschluss an die der Kühlung dienenden Komponente eine in der Kabine 4 vorhandene Kühlbox gekühlt werden kann. Insbesondere kann eine Kühlung der Kühlbox in allen Betriebssituationen des HVAC-Systems 19 gewährleistet werden.

Der dem Heizen dienenden Komponente des HVAC-Systems 19 ist ein Schnittstellenelement 31 nachgeschaltet angeordnet, welches zur Zuführung und Aufteilung eines von dem HVAC-System 19 konditionierten Luftstroms 17 durch unterschiedliche Kanäle 32, 33, 34 zu verschiedenen Abschnitten im Front- und Seitenbereich der Kabine 3 eingerichtet ist.

Dabei kann der Luftstrom insbesondere der Lenksäule, dem Fußraum sowie Seitenbereichen der Kabine 3 durch die unterschiedlichen Kanäle 32, 33, 34 zugeführt werden, die sich an das Schnittstellenelement 31 anschließen. Hierzu weist das Schnittstellelement 31 zumindest einen Kanal 32 auf, der in die Lenksäule mündet. Hier und vorzugsweise münden zwei Kanäle 32 in die Lenksäule. Die beiden Kanäle 32 verlaufen im Wesentlichen parallel nebeneinander. Abschnitte der Kanäle 32, welche im Wesentlichen parallel zum Kabinenboden verlaufen, bilden einen doppelten Boden der Kabine 3 aus. Die Kanäle 32, 33, 34 können mehrteilig ausgeführt sein.

Zwei weitere Kanäle 33, 34 führen zu den einander gegenüberliegenden Seitenbereichen der Kabine 3. Für den Austritt eines konditionierten Luftstroms im Fußraum kann das Schnittstellenelement 31 eine durch ein Gitter, Sieb oder dergleichen abgedeckte Austrittsöffnung 35 aufweisen.

Das Schnittstellelement 31, die Kanäle 32, 33, 34 und/oder weitere luftführende Komponenten des HVAC-Systems 19 sind in ihrem Inneren mit Luftführungselementen ausgeführt. Die in dem Schnittstellelement 31, den Kanälen 32, 33, 34 und/oder den weiteren luftführenden Komponenten angeordneten Luftführungselemente dienen dazu, Druckverluste und durch die Luftströmung verursachte Geräusche im Inneren der Kabine 3 zu reduzieren.

Zwischen den und/oder um die im Kabinenboden verlaufenden Kanäle 32 des HVAC-Systems 19 sind Isolationselemente 36 angeordnet. Hierdurch kann ein Wärmetransfer zwischen den Kanälen 32 und der Umgebung reduziert werden. Ebenso tragen diese Isolationselemente 36 zur Geräuschdämmung bei.

In Fig. 5 ist schematisch und exemplarisch eine Teilschnittansicht im Heckbereich 6 des Kabinendachs 4 gemäß Fig. 2 dargestellt. Die Schnittebene verläuft senkrecht zum Kabinendach 4. Der Luftansaugkanal 13 ist mit den hinteren Kabinensäulen 15 strömungstechnisch verbunden. Im Übergang zwischen den hinteren Kabinensäulen 15 und dem unteren Dachelement 7 sind Dichtungen 37 angeordnet. Die Dichtungen 37 können bevorzugt als ringförmige Silikondichtungen ausgeführt sein. Die Dichtungen 37 dienen der wasserdichten Ausgestaltung des jeweiligen Übergangs zwischen den hinteren Kabinensäulen 15 und dem unteren Dachelement 7.

**Bezugszeichenliste**

| | | | |
|---|---|---|---|
| 1 | Arbeitsmaschine | 34 | Kanal |
| 2 | Traktor | 35 | Austrittsöffnung |
| 3 | Kabine | 36 | Isolationselement |
| 4 | Kabinendach | 37 | Dichtung |
| 5 | Frontbereich | 38 | Profilierung |
| 6 | Heckbereich | | |
| 7 | Unteres Dachelement | | |
| 8 | Oberes Dachelement | | |
| 9 | Befestigungspunkt | | |
| 10 | Klebeabschnitt | | |
| 11 | Stützstruktur | | |
| 12 | Klebeabschnitt | | |
| 13 | Luftansaugkanal | | |
| 14 | Kabinensäule | | |
| 15 | Kabinensäule | | |
| 16 | Ansaugbereich | | |
| 17 | Luftstrom | | |
| 18 | Filterelement | | |
| 19 | HVAC-System | | |
| 20 | Lufteinlasselement | | |
| 21 | Ansaugabschnitt | | |
| 22 | Kanalabschnitt | | |
| 23 | Innenraumansaugbereich | | |
| 24 | Rezirkulationsluftfilter | | |
| 25 | Ansaugbereich | | |
| 26 | Speicherelement | | |
| 27 | Steuereinheit | | |
| 28 | Kanalabschnitt | | |
| 29 | Zusatzgebläse | | |
| 30 | Bypass | | |
| 31 | Schnittstellenelement | | |
| 32 | Kanal | | |
| 33 | Kanal | | |

## Patentansprüche

1. Kabine (3), umfassend:
- vordere und hintere Kabinensäulen (14, 15), auf denen ein Kabinendach (4) angeordnet ist,
- ein in der Kabine (3) angeordnetes Heizungs-, Lüftungs- und Klimatisierungssystem (HVAC-System) (19) mit einem Gebläse, wobei dem HVAC-System (19) zumindest durch die hinteren Kabinensäulen (15) ein Luftstrom (17) mit Umgebungsluft zuführbar ist, sowie
- eine Filtereinrichtung, die zur Filtration der dem HVAC-System (19) zugeführten Umgebungsluft eingerichtet ist, wobei im Kabinendach (4) eine Aufnahme für zumindest ein Filterelement (18) der Filtereinrichtung vorgesehen ist, **dadurch gekennzeichnet, dass** das zumindest eine Filterelement (18) in Abhängigkeit von aus der Umgebungsluft herauszufilternden Stoffen austauschbar und/oder durch ein weiteres Filterelement (18) ergänzbar ist, und dass im Inneren der Kabine (3) zur Zuführung der gefilterten Umgebungsluft ein austauschbarer Ansaugabschnitt (21) eines Lufteinlasselements (20) des HVAC-Systems (19) angeordnet ist, wobei der austauschbare Ansaugabschnitt (21) in Abhängigkeit von dem zumindest einen gewählten Filterelement (18) unterschiedlich ausgebildet ist.

2. Kabine (3) nach Anspruch 1, **dadurch gekennzeichnet, dass** der austauschbare Ansaugabschnitt (21) des Lufteinlasselements (20), welcher mit einem Filterelement (18), welches zur Filtration von staubförmigen Partikeln aus der Umgebungsluft eingerichtet und ausgeführt ist, zusammenwirkt, als Kanalabschnitt (22) ausgeführt ist, der mit den hinteren Kabinensäulen (15) strömungstechnisch verbunden ist.

3. Kabine (3) nach Anspruch 1 oder 2, **dadurch gekennzeichnet, dass** der austauschbare Ansaugabschnitt (21) des Lufteinlasselements (20), welcher mit zumindest einem Filterelement (18), welches zur Filtration von staubförmigen Partikeln und Aerosolen und/oder gasförmigen Stoffen aus der Umgebungsluft eingerichtet und ausgeführt ist, zusammenwirkt, als mit den hinteren Kabinensäulen (15) strömungstechnisch verbundener Kanalabschnitt (28) ausgeführt ist, in den ein Zusatzgebläse (29) integriert ist.

4. Kabine (3) nach einem der Ansprüche 1 bis 3, **dadurch gekennzeichnet, dass** das Kabinendach (4) zweischalig ausgeführt ist, wobei zwischen einem unteren Dachelement (7) und einem oberen Dachelement (8) ein Luftansaugkanal (13) ausgebildet ist, der, ausgehend von einer der vorderen Kabinensäulen (14), sich abschnittsweise in Längsrichtung der Kabine (3) erstreckt und sich im Bereich der hinteren Kabinensäulen (15) zwischen diesen in Querrichtung erstreckt, wobei der Luftansaugkanal (13) durch Verkleben des unteren Dachelementes (7) mit dem oberen Dachelement (8) ausgebildet ist.

5. Kabine (3) nach Anspruch 4, **dadurch gekennzeichnet, dass** der Luftansaugkanal (13) einen außerhalb der Kabine (3) mündenden Ansaugbereich (16) im Kabinendach (4) aufweist, in den das zumindest eine Filterelement (18) in eine im Luftansaugkanal (13) ausgebildete Aufnahme einsetzbar ist.

6. Kabine (3) nach Anspruch 4 oder 5, **dadurch gekennzeichnet, dass** der Luftansaugkanal (13) mit den hinteren Kabinensäulen (15) strömungstechnisch verbunden ist, wobei im Übergang zwischen dem unteren Dachelement (7) und den hinteren Kabinensäulen (15) jeweils Dichtungen (37) angeordnet sind.

7. Kabine (3) nach einem der vorangehenden Ansprüche, **dadurch gekennzeichnet, dass** das zumindest eine Filterelement (18) mit einem durch ein Datenempfangsgerät auslesbaren Speicherelement (26) ausgeführt ist, welches eine Information über die Filterkategorie enthält.

8. Kabine (3) nach Anspruch 7, **dadurch gekennzeichnet, dass** das Datenempfangsgerät in der Kabine (3) angeordnet und mit einer Steuereinheit (27) des HVAC-Systems (19) signaltechnisch verbindbar ist, wobei die Steuereinheit (27) dazu eingerichtet ist, das HVAC-System (19) in Abhängigkeit von der aus dem Speicherelement (18) ausgelesenen Information zur Kategorie des zumindest einen Filterelements (18) anzusteuern.

9. Kabine (3) nach einem der vorangehenden Ansprüche, **dadurch gekennzeichnet, dass** in der Kabine (3) eine Kühlbox angeordnet ist, welche durch einen Bypass (30) unmittelbar mit einer der Kühlung dienenden Komponente des HVAC-Systems (19) verbunden ist.

10. Kabine (3) nach einem der vorangehenden Ansprüche, **dadurch gekennzeichnet, dass** einer dem Heizen dienenden Komponente des HVAC-Systems (19) ein Schnittstellenelement (31) nachgeschaltet ist, welches zur Zuführung und Aufteilung des von dem HVAC-System (19) konditionierten Luftstroms (17) durch unterschiedliche Kanäle (32, 33, 34) zu verschiedenen Abschnitten im Frontbereich (5) und im Seitenbereich der Kabine (3) eingerichtet ist.

11. Kabine (3) nach Anspruch 10, **dadurch gekennzeichnet, dass** das Schnittstellelement (31), die Kanäle (32, 33, 34) und/oder weitere luftführende Komponenten des HVAC-Systems (19) mit Luftführungselementen ausgeführt sind.

12. Kabine (3) nach Anspruch 10 oder 11, **dadurch gekennzeichnet, dass** zwischen den und/oder um die im Kabinenboden verlaufenden Kanäle (32) des HVAC-Systems (19) Isolationselemente (36) angeordnet sind.

13. Kabine (3) nach einem der vorangehenden Ansprüche, **dadurch gekennzeichnet, dass** das HVAC-System (19) ein weiteres Schnittstellelement umfasst, welches zur Zuführung und Abführung von Fluiden in die und aus der Kabine (3) eingerichtet ist.

14. Kabine (3) nach Anspruch 13, **dadurch gekennzeichnet, dass** das weitere Schnittstellenelement gegenüber der Kabine (3) fluiddicht mit dem HVAC-System (19) verbunden ist.

15. Landwirtschaftliche Arbeitsmaschine (1), insbesondere Traktor (2), mit einer Kabine (3), **dadurch gekennzeichnet, dass** die Kabine (3) nach einem der vorangehenden Ansprüche ausgeführt ist.
